# EUROPÄISCHE PATENTSCHRIFT

(11) **EP 0 647 328 B1**
(45) Veröffentlichungstag und Bekanntmachung des Hinweises auf die Patenterteilung: **30.12.1998**
(21) Anmeldenummer: 93914587.6
(22) Anmeldetag: 03.06.1993
(51) Int. Cl.: G02B 6/42, G02B 6/12

(54) **OPTISCHES POLYMERELEMENT ZUM ANKOPPELN VON PHOTOELEMENTEN AN INTEGRIERT-OPTISCHE SCHALTUNGEN**
OPTICAL POLYMER ELEMENT FOR COUPLING PHOTOELEMENTS TO INTEGRATED OPTICAL CIRCUITS
ELEMENT POLYMERE OPTIQUE POUR COUPLER DES CELLULES PHOTO-ELECTRIQUES A DES CIRCUITS OPTIQUES INTEGRES

(30) Priorität: 15.06.1992 DE 4220135
(43) Veröffentlichungstag der Anmeldung: 12.04.1995
(73) Patentinhaber: ROBERT BOSCH GMBH, 70442 Stuttgart (DE)
(72) Erfinder: MAYER, Klaus-Michael, D-7016 Gerlingen (DE)
(86) Internationale Anmeldenummer: DE9300475
(87) Internationale Veröffentlichungsnummer: WO9325924

(56) Entgegenhaltungen:
- EP-A- 0 415 382
- FR-A- 2 226 754
- US-A- 4 666 236
- US-A- 5 119 452
- APPLIED PHYSICS LETTERS. Bd. 55, Nr. 26, 25. Dezember 1989, NEW YORK US Seiten 2712 - 2714 R.J. DERI UND O. WADA 'Impedance matching for enhanced waveguide/photodetector integration'
- Nonlinear Optical Properties of Organic Materials III, San Diego, California, 11-13 Juli 1990, SPIE Proceedings Series, Band 1337,1990, SPIE, Bellingham, US, L.A. HORNAK et al.: 'The Impact of Polymer Integrated Optics on Silicon Wafer Area Networks', Seite 12-22
- PATENT ABSTRACTS OF JAPAN vol. 14, no. 430 (P-1106)14. September 1990 & JP,A,02 168 206 (BROTHER INT LTD)
- APPLIED OPTICS. Bd. 29, Nr. 18, 20. Juni 1990, NEW YORK US Seiten 2781 - 2792 T. BABA UND Y. KOKUBUN 'High efficiency light coupling from antiresonant reflecting optical waveguide to integrated photodetector unsing an antireflecting layer'
- APPLIED OPTICS. Bd. 28, Nr. 21, 1. November 1989, NEW YORK US Seiten 4629 - 4636 G. MAK ET AL. 'Waveguide-detector coupler for integrated optics and monotithic optoelectronic switching arrays'
- APPLIED PHYSICS LETTERS. Bd. 56, Nr. 18, 30. April 1990, NEW YORK US Seiten 1737 - 1739 R.J. DERI 'Integrated waveguide/photodiodes using vertical impedance matching'

## Beschreibung

Die Erfindung betrifft ein optisches Polymerelement nach dem Oberbegriff des Hauptanspruches und findet vorzugsweise Anwendung bei der Ankopplung geeigneter Photodioden an Bauelementen der Integrierten Optik.

Der zunehmende Einsatz integriert-optischer Komponenten für die optische Nachrichtentechnik, für die Sensorik und den Computerbereich läßt der optischen Anschlußtechnik eine immer größere Bedeutung zukommen.

Bauelemente der Integrierten Optik (IO) für die optische Nachrichtentechnik (Wellenlängenbereich 1300 bis 1550 nm) wie auch für die optische Sensorik (üblicherweise im Wellenlängenbereich 633-850 nm) benötigen an der Schnittstelle zwischen optischer und elektronischer Signalverarbeitung eine optoelektronische signal wandlung. Dies geschieht beispielsweise durch Einkoppeln des Signallichtes in eine Photodiode mit entsprechender spektraler Empfindlichkeit (z.B. für die optische Nachrichtentechnik InP-Compounds, für die Sensorik Si-Photo-dioden).

Der übliche Weg der Ankopplung einer Photodiode an einen optischen Lichtwellenleiter besteht in einer direkten Ankopplung der Photodiode an das Wellenleiterende ("Stoßkopplung"). Die Lichtenergie wird dabei vollständig in die Diode geführt und dort in elektronische Anregungszustände überführt. Daneben kann auch ein optischer Wellenleiter schwach mit einer Photodiode gekoppelt werden, indem lediglich seine evaneszenten Feldanteile in die Diode überkoppeln ("Leckwellenkopplung")- die Größe der elektronischen Signalantwort ist hierbei eine Funktion von Koppelstärke und Koppellänge. Alternativ kann ferner ein Lichtwellenleiter durch einen optischen Halbleiterverstärker (im wesentlichen eine Halbleiterlaserdiode mit entspiegelten Endflächen) hindurchgeführt werden und der Abbau der Ladungsträgerinversion über die äußere Stromversorgung der Verstärkerdiode als elektronisches Signal abgegriffen werden.

Die bekannten Bauelemente haben den Nachteil, daß sie nur relativ aufwendig herzustellen sind.

### Vorteile der Erfindung

Das erfindungsgemäße optische Polymerelement nach den Kennzeichen des Hauptanspruches bietet demgegenüber den Vorteil, daß eine einfachste Kopplung und Befestigung von Photoelementen an integriert-optische Polymerlichtwellenleiter möglich ist, das Polymerelement kompatibel mit planar integrierter Elektronik ist und durch massenhafte Herstellung große Kostenvorteile erzielt werden.

Dazu wird zwischen dem Lichtwellenleiter und dem Photoelement eine Pufferschicht vorgesehen, wobei die Pufferschicht im Bereich des Photoelementes einen Brechungsindex aufweist, der kleiner als der Brechungsindex des Lichtwellenleiters, aber größer als der Brechungsindex der Pufferschicht außerhalb des Bereiches des Photoelementes ist.

Weitere vorteilhafte Ausgestaltungen sind in den Unteransprüchen angegeben.

Eine bevorzugte Lösung ist, wenn die Photodioden in geeignete Substrate (z.B. Silicium) durch Diffusionsprozesse und/oder Ionenimplantation direkt planar und monolithisch integriert werden. Die elektrische Verdrahtung erfolgt vorteilhaft direkt auf dem Chip. Um optische Lichtwellenleiter auf einen solcherart elektronisch prozessierten Chip aufzubringen, wird zunächst eine optische Pufferschicht mit geringerem Brechungsindex als die lichtführende Schicht aufgebracht. Darauf folgt die lichtführende Polymerschicht mit den lateral strukturierten Lichtwellenleitern und darüber optional eine obere Abdeckschicht geringeren Brechungsindex. Ist nun die Pufferschicht optisch dünn (Dicke < 1/e-Abfall der Feldverteilung), so greifen die evaneszenten Feldanteile bis ins Substrat und führen zu starken Intensitätsverlusten. Ist umgekehrt die Pufferschicht optisch dick (Dicke >> 1/e-Abfall der Feldverteilung) so wird auch im Bereich der Photodiode kein Licht in diese eingekoppelt.

Die notwendige hohe und lokale Ankopplung des Lichtwellenleiters an die Photodiode wird nun dadurch erreicht, daß die "optisch isolierende" Pufferschicht lokal über dem empfindlichen Fenster der Photodiode optisch so veränderbar ist, daß die evaneszenten Felder lokal weit über die Pufferschicht hinaus- (und in die Photodiode hinein-) ragen können. Dazu kann die Pufferschicht so maskiert werden, daß eine lokale Ionendiffusion oder Ionenimplantation nur den Brechungsindex in einem gewünschten Fenster über der Photodiode anhebt. Die Maskierung wird nach dem Prozeß entfernt und die Lichtwellenleiter- und Deckschicht aufgebracht. Der Koppelgrad des Lichtwellenleiters kann über die Indexänderung in der Pufferschicht eingestellt werden.

Eine vorteilhafte Möglichkeit der Realisierung bietet eine Polymerschicht (z.B. PMMA als optischer Puffer) mit photopolymersierbaren Zusätzen (z.B. Benzildimethylketal). Hier kann der Brechungsindex der Pufferschicht lokal über der Photodiode durch einfache UV-Belichtung in Maskentechnik angehoben werden. Durch UV-Belichtung von Strukturen variierter Dichte (Graukeil) kann der Index darüber hinaus auch räumlich allmählich verändert werden, wenn Indexsprünge und evtl. resultierende Störungen der Monomodigkeit des Wellenleiters vermieden werden sollen. Abhängig vom Photopolymerisationsverhalten des optischen Puffers kann dabei entweder ein Indexprofil des Puffers in Wellenleiterlängsrichtung erzeugt werden (d.h. leicht erhöhter Brechungsindex an den Rändern der Photodiode, stärker erhöhter Index über dem Detektionsfenster der Diode) oder ein räumliches Tiefenprofil der Indexerhöhung in der Pufferschicht (d.h. oberflächliche Indexerhöhung an den Diodenrändern, tiefergreifende Indexerhöhung über dem Detektionsfenster der Diode => "vertikaler Taper") erzeugt werden.

In beiden Grenzfällen (Mischungen sind möglich) bewirkt der über der Photodiode leicht angehobene Brechungsindex dort eine schwächere Führung des Lichtes, gleichbedeutend mit einer verbreiterten Feldverteilung in Richtung auf die Diode. Durch adiabatische Indexänderungen (z.B. Graukeil-Belichtungen) wird dabei die Störung der Führungseigenschaften hinreichend klein gehalten, um die Monomodigkeit des Wellenleiters zu bewahren - dies ist wichtig, wenn das Signal an der Photodiode vorbeigeschleift werden (und durch die Detektion lediglich geschwächt) werden soll oder wenn das Signal in optischen Resonatoren wellenlängenselektiv eingekoppelt werden soll, ohne die Modenverteilung im Resonator massiv zu beeinflussen.

Die Pufferschicht kann darüber hinaus selbst auch lateral photostrukturiert werden, indem eine spitz zulaufende Taperstruktur mit leicht erhöhtem Index in dieselbe hineinbelichtet wird. Auch in diesem Falle wird durch die Indexmanipulation der Pufferschicht das Lichtfeld eines darüberliegenden Wellenleiters allmählich (durch adiabatisches Einschalten der Störung) nach unten in Richtung auf die Diode ausgedehnt. Wird der Brechungsindex der Pufferschicht im getaperten Bereich gar höher eingestellt als der des darüberliegenden Lichtwellenleiters, so wird das Lichtfeld vollständig aus dem Wellenleiter abgezogen und der Diode zugeführt werden.

Der Lichtwellenleiter wird anschließend an die Indexmanipulation der Pufferschicht, wie oben beschrieben, in der darüberliegenden Schicht strukturiert. Wesentlich ist hier die prinzipielle Möglichkeit, beliebig vorprozessierte und verdrahtete Elektronikchips nachträglich mit einer polymeren "optischen Verbindungsebene" zu überschichten, was aufgrund der geringen notwendigen Prozeßtemperaturen zur Herstellung polymerer Lichtwellenleiter ohne Störung der elektronischen Bauelemente erfolgen kann.

Erfindungsgemäß ist weiterhin, wenn Lichtwellenleiter in Form kleiner, präzisionsgefertigter Gräben auf einer "Masterstruktur" vordefiniert werden und durch eine galvanotechnische Abformung zum Formeinsatz (Werkzeug) für Spritzguß- oder Spritzprägeverfahren weiterverarbeitet werden. Damit wird eine massenproduzierbare Vervielfältigung optischer Lichtwellenleiterbauelemente möglich. Die kleinen Gräben in den geprägten "Tochterstrukturen" (Polymer-Substrate) werden zur Fertigstellung eines vollpolymeren Bauelementes mit höherbrechendem optischem Polymer aufgefüllt (Kanalwellenleiter) und mit einer polymeren (niederbrechenden) Deckelplatte (Superstrat) nach oben abgeschlossen. Die Deckelplatte kann beispielsweise aus dem selben Material wie die Wellenleiter-Tochterstrukturen bestehen und dann ein passives Bauelement definieren. Die Deckelplatte kann aber auch hybrid eingesetzte elektronische Bauelemente (z.B. Photodioden) tragen, die dann optisch an die Lichtwellenleiter angekoppelt werden können. Dazu wird für die Deckelplatte eine geeignete Masterstruktur mit Aufnahmeöffnungen für die elektronischen Bauelemente hergestellt. Dies kann durch anisotropes Präzisionsätzen von Aufnahmevertiefungen in Siliciumwafern oder auch durch sogenannte Röntgentiefenlithographie in PMMA-Materialien erfolgen. Die Deckelstrukturen können hiervon wie die Lichtwellenleiter galvanisch abgeformt und in Spritzguß/Spritzprägeverfahren vervielfältigt werden.

Die Photodioden (und gegebenenfalls weitere Bauelemente) werden einzeln (oder vorzugsweise als Detektorarray) in die Vertiefungen der Deckelplatte eingesetzt und befestigt. Vor dem paßgenauen Zusammenfügen der so vorbereiteten Deckelplatte und der Grundplatte mit den optischen Lichtwellenleitern (in Form kleiner Gräben mit eingefülltem, höherbrechendem Flüssigpolymer), muß eine optische Pufferschicht zwischen die Lichtwellenleiter und die Elektronik in der Deckelplatte eingearbeitet werden, die eine optische Kopplung über die evaniszenten Feldanteile nur im Bereich der Diodeneintrittsfenster erlaubt.

Hierfür bieten sich zwei vorteilhafte Wege an:
a) Die elektrische Verdrahtung der Elektronik erfolgt durch Abscheidung entsprechender Leiterbahnen auf der bestückten Deckelplatte. Darüber wird eine Polymerschicht (Index wie Deckelplatte) mit photopolymerisierbaren Beimischungen als optischer Puffer aufgebracht. Durch lokale UV-Belichtung (Maskentechnik) kann der Index im Bereich der Photodiode, wie oben beschrieben, mit oder ohne Taperstrukturen so eingestellt werden, daß hier - und nur hier - im fertig montierten Bauelement die Lichtankopplung möglich ist.
b) Die Herstellung der elektrischen Leiterbahnen erfolgt auf einer Seite einer dünnen Polymerfolie. Diese muß als optische Pufferschicht geeignet sein, d.h. geringe Dämpfung und einen Brechungsindex kleiner dem der Wellenleiter aufweisen (optische Foliendicke >> 1/e-Abfall der opt. Felder). Die Folie könnte beispielsweise aus dem gleichen Material bestehen, aus dem auch Tochterstrukturen und Deckelstrukturen gefertigt werden. Bei Dicken im µm-Bereich wird diese Folie vorzugsweise zunächst durch eine Trägerfolie stabilisiert.

Die Pufferfolie wird mit den elektrischen Leiterbahnen auf die Deckelplatte auflaminiert, um so eine Kontaktierung der elektronischen Baugruppen zu gewährleisten (danach kann die rückseitige Trägerfolie abgezogen werden).

Der Brechungsindex der Pufferfolie kann nun im Bereich der Diodenfenster durch Diffusions- oder Implantationsprozesse bzw. durch UV-Belichtungen (bei entsprechend vernetzbaren Oligomeren in der Folie) wieder lokal angehoben und damit der Koppelgrad eingestellt werden. Wieder stehen die verschiedenen Möglichkeiten lateralen und vertikalen Taperns zur Verfügung.

Es kann jedoch auch in vorteilhafter Weise mittels eines entsprechend geformten Prägewerkzeugs eine thermoplastische Folie im Bereich der Diodenfenster heiß geprägt werden. Daraus resultiert eine durch die Prägewerkzeuge definierte, lokal geringfügig dünnere Schichtdicke des optischen Puffers und daraus letztlich eine stärkere Feldankopplung in den gewünschten Bereichen. Die Feldverteilungen sind wiederum mit den bereits genannten qualitativen Verläufen vergleichbar.

Abschließend wird das komplette Bauelement paßgenau zusammengefügt, so daß die Photodiodenfenster genau über den zugehörigen Lichtwellenleitern zu liegen kommen. Das höherbrechende Polymer in den Lichtleitergräben kann dabei als thermisch- oder UV-vernetzender Kleber ausgebildet sein und so die mechanische Verbindung der Baugruppen gewährleisten. Gleichzeitig werden durch dieses Flüssigpolymer eventuelle Dickenunterschiede zur Deckelplatte, beispielsweise im Falle geprägter Pufferfolien, ausgeglichen. Die Pufferfolie kann mit ihren aufgebrachten Leiterbahnen seitlich über die Deckelplatte hinausstehen und eine einfache elektrische Kontaktierung nach außen ermöglichen.

Im Sinne der Erfindung ist weiterhin, wenn ein Lichtwellenleiter, der beispielsweise durch lokale Photopolymerisation, durch sogenanntes "UV-Bleaching" oder durch eine andere Strukturierungstechnik in einem organischen Polymerfilm hergestellt wurde, durch einen optisch höherbrechenden, transparanten Klebstoff (z.B. UV-polymerisierende Kleber) an die Photodiode angekoppelt wird. Diese befindet sich mit ihrer photoempfindlichen Seite direkt über dem nach oben nicht abgedeckten Lichtwellenleiter. Durch Wahl des Brechungsindex, der Dicke und der Fläche (Länge in Wellenleiterrichtung) des Polymerklebers kann der Grad der optischen Ankopplung eingestellt werden. Je nach Koppelgrad kann das Licht aus dem Lichtwellenleiter ausgekoppelt (und im verlustfreien Grenzfall in die Photodiode eingekoppelt) werden, oder aber nur geringfügig geschwächt werden, um beispielweise aus einem Datenbus Signale abzugreifen, ohne dessen optische Transparenz zu beeinflussen. Ein geeigneter Koppelabstand kann durch die Formgebung der Diode eingestellt werden. Der optische Kleber dient gleichzeitig sowohl der optischen Ankopplung wie auch der mechanischen Fixierung. Der gesamte Chip kann nachträglich mit einer niederbrechenden Deckschicht vergossen und geschützt werden.

Als Anwendungsbeispiele seien etwa integriertoptische Weg-/Winkelsensoren oder nachrichtentechnische Empfängerstationen genannt, die so in kostengünstiger Weise montiert werden können. Im Falle einer wellenlängenselektiven Detektion müßten die Signale hier durch wellenlängenselektive Koppler oder integriert-optische Resonatoren auf dem optischen Chip ausgefiltert und dem Photoempfänger zugeführt werden.

Die Erfindung soll nachfolgend in Ausführungsbeispielen anhand der zugehörigen Zeichnungen näher erläutert werden. Es zeigen:
- Figur 1: perspektivisch die prinzipielle Ankopplung einer Photodiode;
- Figur 2: einen Schnitt durch die Kopplungsstelle gemäß Figur 1;
- Figur 3: eine Ankoppelstelle an einem weiteren Beispiel in Draufsicht;
- Figur 4: einen Schnitt durch die Ankoppelstelle gemäß Figur 3;
- Figur 5: eine Ankoppelstelle gemäß Figur 3 mit einem getaperten Pufferbereich;
- Figur 6: einen Schnitt durch die Ankoppelstelle gemäß Figur 5;
- Figur 7: perspektivisch ein Polymerwellenleiterbauelement vor der Montage;
- Figur 8: einen Schnitt durch das Polymerwellenleiterbauelement gemäß Figur 7 im montierten Zustand;
- Figur 9: perspektivisch ein Polymerwellenleiterbauelement mit integrierter Photodiode vor der Montage;
- Figur 10: einen Schnitt durch das Polymerwellenleiterbauelement gemäß Figur 9 im montierten Zustand;
- Figur 11: perspektivisch ein weiteres Polymerwellenleiterbauelement mit integrierter Photodiode vor der Montage;
- Figur 12: einen Schnitt durch das Polymerwellenleiterbauelement gemäß Figur 11 im montierten Zustand;
- Figur 13: einen Schnitt durch ein weiteres Polymerwellenleiterbauelement mit integrierter Photodiode und
- Figur 14: einen Schnitt durch ein weiteres Polymerwellenleiterbauelement mit integrierter Photodiode.

In allen Figuren werden gleiche Teile, auch sinngemäß gleiche Teile, mit denselben Bezugszeichen bezeichnet.

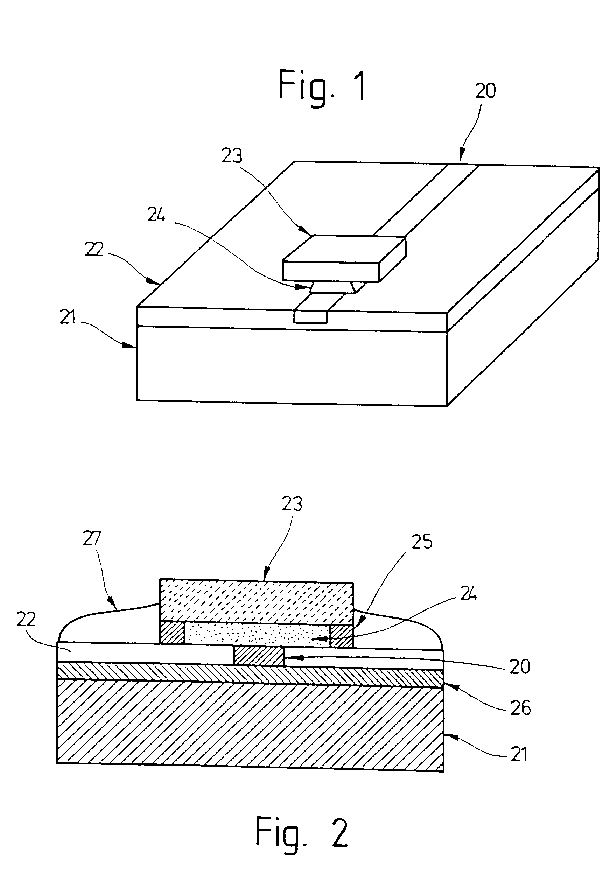

Figur 1 zeigt einen Lichtwellenleiter 20, der in einem auf einer Substratplatte 21 vorgesehenen Polymerfilm 22 angeordnet ist. Auf den Lichtwellenleiter 20 ist eine Photodiode 23 mittels eines Polymerklebers 24 aufgeklebt.

In Figur 2 wird deutlicher, daß die Photodiode 23 einen bestimmten Abstand zum Polymerfilm 22 und damit zum Lichtwellenleiter 20 besitzt. Dieser Abstand wird durch die Abstandshalter 25 bestimmt. Zwischen Substratplatte 21 und Polymerfilm 22 ist eine Pufferschicht 26 vorgesehen. Die Photodiode 23 ist mit ihrer photoempfindlichen Seite direkt über dem Lichtwellenleiter 20 angeordnet. Das gesamte Bauelement ist mit einer Deckschicht 27 vergossen. Für die Brechungsindexe der einzelnen Bestandteile gelten folgende Beziehungen:

Der Brechungsindex n₀ der Deckschicht 27 und der Brechungsindex n₄ der Pufferschicht 26 ist kleiner oder gleich dem Brechungsindex n₃ des Polymerfilms 22. Der Brechungsindex n₁ des Lichtwellenleiters 20 ist größer als n₃. Der Brechungsindex n₂ des Polymerklebers 24 ist kleiner oder gleich dem Brechungsindex n₁ des Lichtwellenleiters 20.

Die prinzipielle Funktionsweise ist folgende:

Ein durch den Lichtwellenleiter 20 geleiteter Lichtimpuls wird entsprechend dem eingestellten Brechungsindex sowie der Dicke und der Länge des Polymerklebers 24 aus dem Lichtwellenleiter 20 ausgekoppelt, je nach Einsatz teilweise oder vollständig, und der Photodiode zugeführt, die dort ihre vorherbestimmte Funktion ausführt. Die Abstandshalter 25 können auf die Photodiode 23 aufgebrachte und beispielsweise galvanisch auf die gewünschte Dicke (=Abstand) verstärkte Metallflächen sein, die gleichzeitig als Leiterbahnen zur Fortführung des Signals der Photodiode 23 dienen.

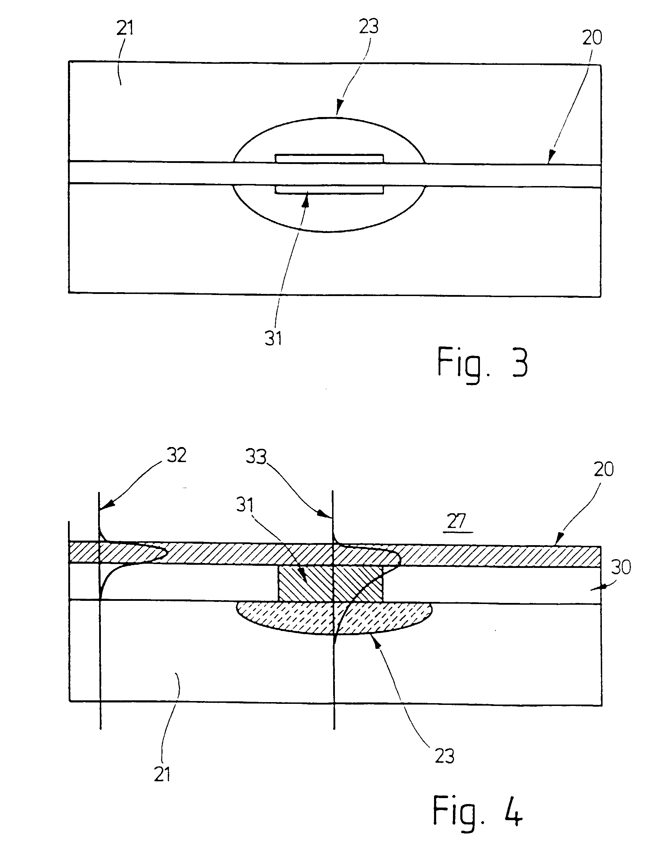

Das in den Figuren 3 und 4 gezeigte Beispiel besteht aus einer in einer Substratplatte 21 integrierten Photodiode 23, über die getrennt durch eine Pufferschicht 30 der Lichtwellenleiter 20 verläuft. Die Pufferschicht 30 besitzt einen Bereich 31, der direkt zwischen dem Lichtwellenleiter 20 und dem photoempfindlichen Fenster der Photodiode 23 angeordnet ist.

Für die Brechungsindexe gelten folgende Beziehungen:

Der Brechungsindex n₀ der Deckschicht 27 ist kleiner oder gleich dem Brechungsindex n₃ der Pufferschicht 30, der wiederum kleiner als der Brechungsindex n₂ des Bereiches 31 ist, welcher kleiner als der Brechungsindex n₁ des Lichtwellenleiters 20 ist. In 32 ist die qualitative Feldverteilung außerhalb des Bereiches 31 gezeigt. Der Lichtimpuls wird innerhalb des Lichtwellenleiters 20 geführt. Die qualitative Feldverteilung im Bereich 31, hier mit 33 bezeichnet, macht deutlich, daß durch den höheren Brechungsindex der Pufferschicht 30 die evaneszenten Feldanteile lokal weit über die Pufferschicht 30 hinaus-, und damit in das photoempfindliche Fenster der Photodiode 23 hineinragen. Damit wird die beabsichtigte Detektionsfunktion der Photodiode 23 ausgelöst.

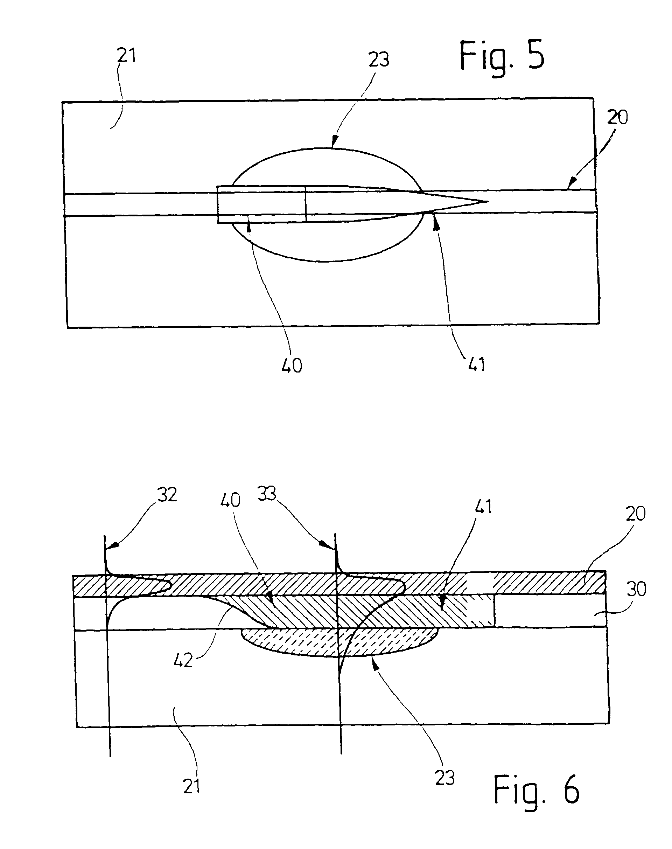

In den Figuren 5 und 6 ist in einem bevorzugten Ausführungsbeispiel mit einem analogen Aufbau gemäß den Figuren 3 und 4 gezeigt, wie der Bereich 31 getapert ist. Auf der linken Seite ist in 40 ein vertikaler Taper und auf der rechten Seite in 41 ein lateraler Taper schematisch gezeigt (in konkreten Bauelementen wird dann entweder die eine oder die andere Taperform auf beiden Diodenseiten verwendet).

Im Bereich 40 besitzt der Taper an den Rändern der Photodiode 23 einen leicht erhöhten Brechungsindex und über dem photoempfindlichen Fenster der Photodiode 23 einen stärker erhöhten Brechungsindex. Der Verlauf der Brechungsindexerhöhung ist mit der Linie 42 angedeutet. Der Taper kann jedoch auch einen lateral zugespitzten Verlauf, wie im Bereich 41 gezeigt, haben. Hier nimmt der Brechungsindex in lateraler Richtung bis zum Auslaufen des Tapers außerhalb der Photodiode 23 ab. Für die Verhältnisse der Brechungsindexe und der qualitativen Feldverteilung gilt das bereits zu den Figuren 3 und 4 Gesagte.

Die weiteren Beispiele beziehen sich auf vollpolymere Bauelemente, die in Abformtechnik hergestellt werden.

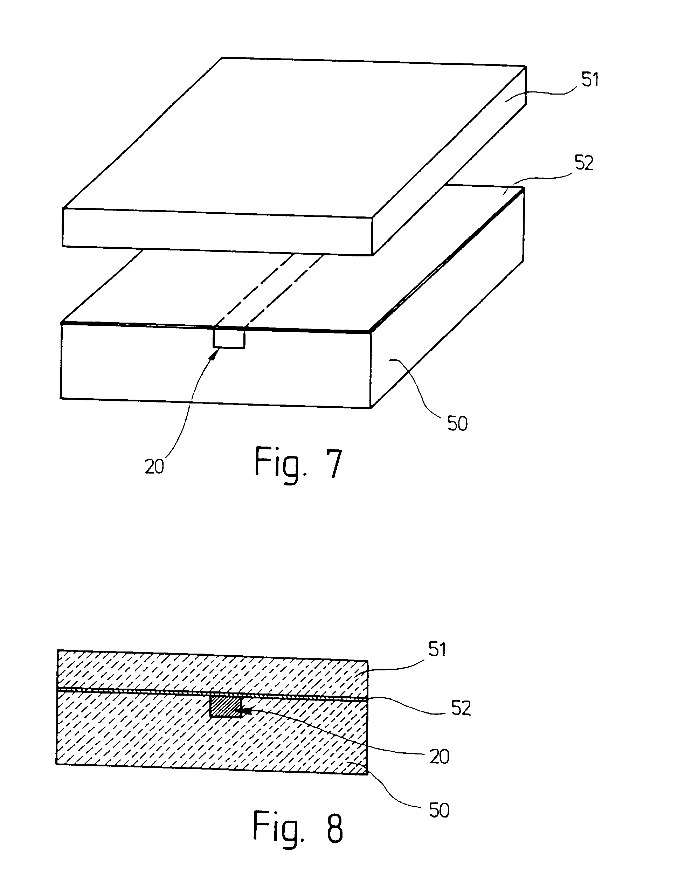

Der prinzipielle Aufbau von vollpolymeren Bauelementen ist in den Figuren 7 und 8 verdeutlicht. In einer Grundplatte 50 aus Polymersubstrat werden in präzisionsgefertigten Größen höherbrechende optische Polymere eingegossen, die den Lichtwellenleiter 20 bilden. Die Grundplatte 50 wird mit einer Deckelplatte 51, die aus dem selben Polymersubstrat wie die Grundplatte 50 bestehen kann, abgedeckelt. Die Verbindung erfolgt mittels eines Flüssigpolymers 52, das identisch mit dem Polymer des Lichtwellenleiters 20 sein kann.

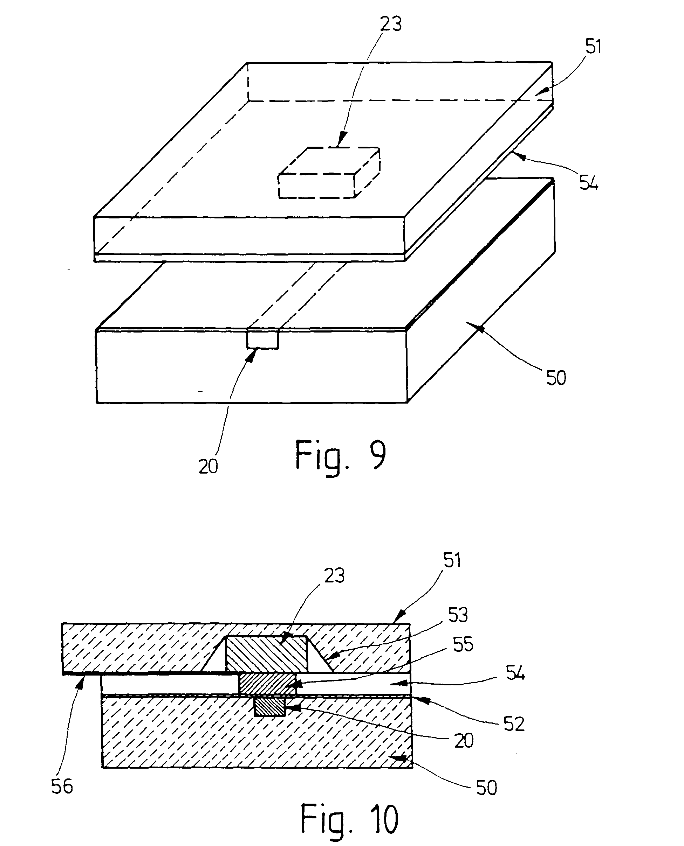

Wie in den Figuren 9 und 10 gezeigt, wird eine Photodiode 23 in eine Vertiefung 53 der Deckelplatte 51 eingesetzt. Zwischen der Grundplatte 50 bzw. dem Kleber 52 und der Deckelplatte 51 wird eine optische Pufferschicht 54 angeordnet. Die optische Pufferschicht 54 besitzt einen Bereich 55, der nur in diesem Bereich eine Kopplung zwischen dem Lichtwellenleiter 20 und der Photodiode 23 zuläßt. Der Bereich 55 kann wiederum wie bereits der in den Figuren 3 bis 6 beschriebene Bereich 31, also ohne oder mit Taperstrukturen, ausgebildet sein. Die elektrischen Anschlußbahnen 56 der Photodiode 23 werden auf der bestückten Deckelplatte 51 nach außen geführt.

Die Brechungsindexe der einzelnen Bereiche verhalten sich analog zu den in den Figuren 1 bis 4 beschriebenen, wobei die Brechungsindexe von Substratplatte 50 und Deckelplatte 51 kleiner oder gleich dem Brechungsindex der Pufferschicht 54 sind.

Ein durch den Lichtwellenleiter 20 kommender Lichtimpuls wirkt mit seinen evaneszenten Feldanteilen im Bereich des photoaktiven Fensters der Photodiode 23, und nur hier, durch die Pufferschicht 54 hindurch und löst in der Photodiode 23 die gewünschte Schaltfunktion aus, die über die Anschlußbahnen 56 abgegriffen werden kann.

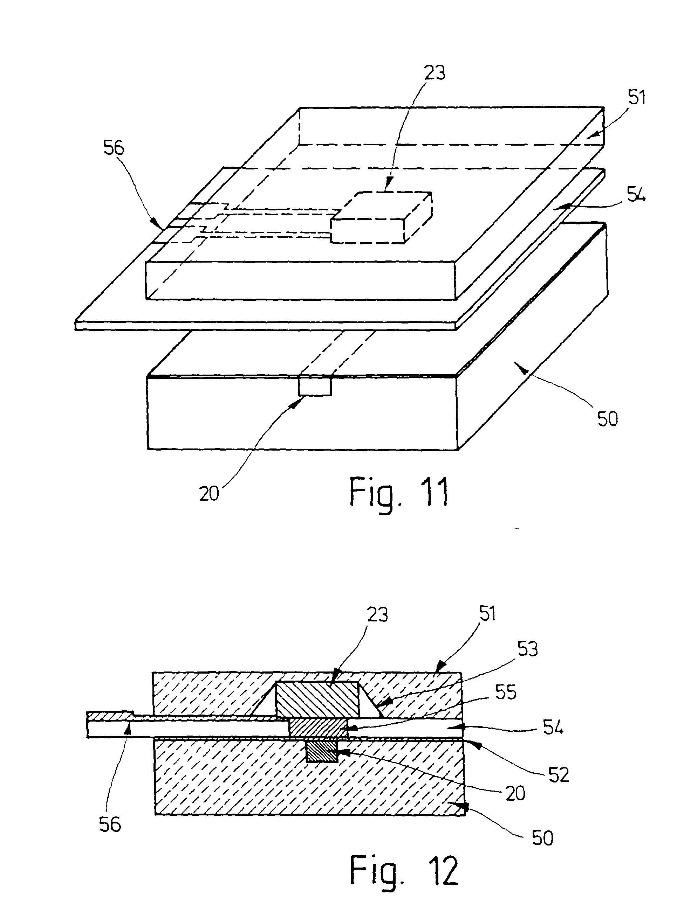

Ein weiteres Beispiel ist in den Figuren 11 und 12 dargestellt. Die elektrischen Anschlußbahnen 56 der Photodiode 23 werden auf einer dünnen Polymerfolie angelegt, die gleichzeitig als optische Pufferschicht 54 dient. Die Folie wird vor der Montage auf die Deckelplatte 51 paßgenau auflaminiert. Alle weiteren Bestandteile und Funktionen sind bereits zu den anderen Beispielen ausführlich beschrieben.

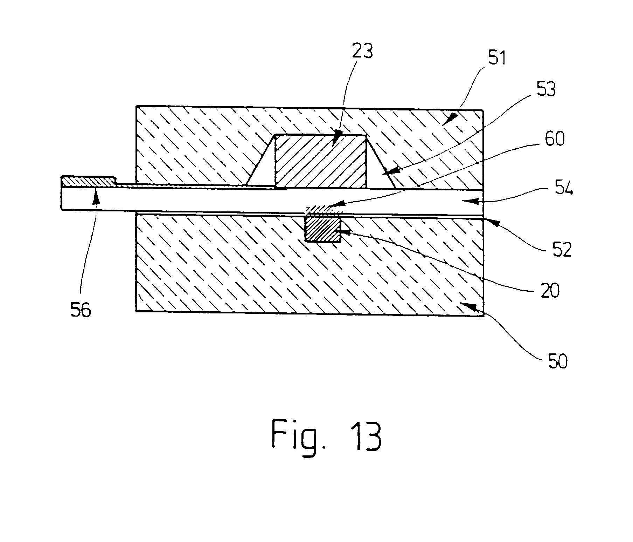

Das Beispiel gemäß Figur 13 weist eine optische Pufferschicht 54 in Form einer Folie, wie in den Figuren 11 und 12 beschrieben, auf, die im Bereich des photoaktiven Fensters geprägt wurde. Die Prägung ist derart durchgeführt, daß sich ein Bereich 60 ergibt, der eine lokal definierte geringfügig dünnere Schichtdicke der Pufferschicht 54 ergibt. Durch die Einstellung dieser Schichtdicke wird die Ankopplung der Photodiode 23 an den Lichtwellenleiter 20 in bereits beschriebener Art und Weise eingestellt.

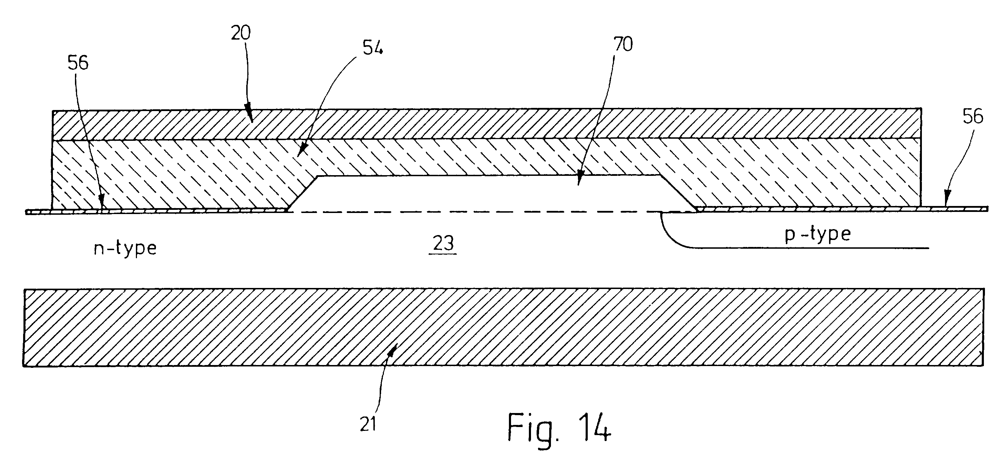

In weiterer Ausgestaltung, wie in Figur 14 gezeigt, kann neben der beschriebenen Indexmanipulation der Pufferschicht 54, welche dieselbe "optisch dünner" und damit für die Lichtwellen durchgängig gestaltet, die Lichteintrittsfläche der Photodiode 23 auch geometrisch näher an den Lichtwellenleiter herangeführt werden. Dazu kann die Photodiodenstruktur, im Beispiel wird ohne Beschränkung der Allgemeinheit eine InP-basierende Technologie beschrieben, selektiv über dem Lichteintrittsfenster mit einer InP-Deckschicht 70 überwachsen werden, welche typischerweise 0,2 bis 1 µm dick sein kann. Wird über eine solche Diodenstruktur ein planarisierender Polymerpuffer 54 und darauf der Lichtwellenleiter 20 aufgebracht, so wird die Pufferwirkung im Bereich des Diodeneintrittsfensters deutlich reduziert und wegen des höheren Brechungsindex der Halbleitermaterialien (typisch n 3,5) wird das evaneszente Licht aus dem Lichtwellenleiter herausgezogen und dem lichtempfindlichen p/n-Übergang der Halbleiterdiode zur Detektion zugeführt.

Dieser geometrische Effekt der Photodiode, welche in die Pufferschicht hineinragt, kann im bereits beschriebenen Sinne zusätzlich mit photopolymerisierten, getaperten Strukturen in der Pufferschicht kombiniert werden.

## Patentansprüche

1. Integriert-optisches Element zur evaneszenten Ankopplung eines Photoelements an einen Wellenleiter, mit einem Substrat (21), einem Wellenleiter und einem Photoelement, wobei sich, zwischen dem Wellenleiter (20) und dem Photoelement (23) eine Pufferschicht (30) befindet, die einen Brechungsindex aufweist, der Stets kleiner ist als der Brechungsindex des Wellenleiters, und wobei der Brechungsindex der Pufferschicht im Bereich des Photoelements (23) größer ist als der Brechungsindex der Pufferschicht außerhalb des Bereichs des Photoelements (23).

2. Integriert-optisches Element nach Anspruch 1, bei dem das Photoelement durch Implantation und/oder Diffusion in eine Oberfläche des Substrats planar und monolithisch integriert ist, bei dem die Pufferschicht auf die Oberfläche des Substrats aufgebracht ist, und bei dem auf die Pufferschicht eine Polymerschicht aufgebracht ist, in welcher der Wellenleiter lateral strukturiert ist.

3. Integriert-optisches Element nach einem der vorhergehenden Ansprüche, bei dem der Brechungsindex der Pufferschicht (30) durch lokale Ionendiffusion oder Ionenimplantation im Bereich des Photoelementes (23) angehoben ist.

4. Integriert-optisches Element nach einem der vorhergehenden Ansprüche, bei dem als Pufferschicht (30) eine Polymerschicht mit photopolymerisierbaren Zusätzen eingesetzt wird, deren Brechungsindex im Bereich des Photoelements (23) durch UV-Belichtung eingestellt ist.

5. Integriert-optisches Element nach Anspruch 4, bei dem die Pufferschicht (30) in lateraler Richtung photostrukturiert ist, indem eine Taperstruktur (40, 41) mit leicht erhöhtem Index hineinbelichtet ist.

6. Integriert-optisches Element nach Anspruch 5, bei dem die Taperstruktur spitz zulaufend ist.

7. Integriert-optisches Element nach Anspruch 1, bei dem das Photoelement (23) in eine polymere nach oben abgeschlossene Deckelplatte (51) eingebracht sind, die Deckelplatte (51) paßgenau auf eine Wellenleiter (20) aufweisende Grundplatte (50) gefügt ist und zwischen Deckelplatte (51) und Grundplatte (50) die Pufferschicht (54) eingebracht ist.

8. Integriert-optisches Element nach Anspruch 7, bei dem die Aufnahmeöffnung (53) für das Photoelement (23) in die Deckelplatte (51) durch Einstellung einer Masterstruktur, die galvanisch abgeformt ist und in Spritzguß- /Spritzprägeverfahren vervielfältigt ist, hergestellt ist.

9. Integriert-optisches Element nach einem der Ansprüche 7 oder 8, bei dem die optische Pufferschicht (54) mit photopolymerisierbaren Beimischungen auf die Deckelplatte (51) aufgebracht ist und durch lokale UV-Belichtung im Bereich des empfindlichen Fensters des Photoelementes (23) der Brechungsindex in Wellenleiterlängsrichtung und/oder als räumliches Tiefenprofil der Brechungsindexerhöhung und/oder als Taperstruktur erzeugt ist.

10. Integriert-optisches Element nach einem der Ansprüche 7 bis 9, bei dem die Pufferschicht (54) als dünne Polymerfolie ausgebildet ist, auf deren einen der Deckelplatte (51) zugewandten Seite elektrische Leiterbahnen (56) angeordnet sind und diese Pufferschicht mit den elektrischen Leiterbahnen auf die Deckelplatte (51) auflaminiert ist und damit gleichzeitig die Photoelemente (23) elektrisch kontaktiert.

11. Integriert-optisches Element nach einem der vorhergehenden Ansprüche, bei dem die Wellenleiter (20) aus Polymeren bestehen, die in als Gräben in einer polymeren Grundplatte ausgebildete Strukturen eingebracht wurden, wobei die in die Gräben eingebrachten Polymere über einen höheren Brechungsindex verfügen als die polymere Grundplatte.

12. Integriert-optisches Element nach einem der vorhergehenden Ansprüche, bei dem der Brechungsindex der Pufferschicht (54) im Bereich des empfindlichen Fensters des Photoelementes (23) durch Diffusions- oder Implantationsprozesse oder UV-Belichtungen lokal erhöht ist.

13. Integriert-optisches Element nach einem der vorhergehenden Ansprüche, bei dem der Grad der optischen Ankopplung über den Brechungsindex der Pufferschicht eingestellt ist.

14. Integriert-optisches Element nach einem der vorhergehenden Ansprüche, bei dem der Brechungsindex der Pufferschicht mit einer lateralen und/oder vertikalen Variation innerhalb des Bereichs des Photoelements versehen ist.

15. Integriert-optisches Element nach einem der vorhergehenden Ansprüche, bei dem die optische Pufferschicht (54) aus einer mittels eines Prägewerkzeuges geprägten thermoplastischen Folie besteht.

16. Integriert-optisches Element nach einem der vorhergehenden Ansprüche, bei dem die optische Pufferschicht (54) im Bereich (60) des empfindlichen Fensters des Photoelementes (23) lokal eine geringere Schichtdicke aufweist.

17. Integriert-optisches Element nach einem der vorhergehenden Ansprüche, bei dem die, elektrische Leiterbahnen (56) führende, Pufferschicht (54) über die äußeren Abmessungen der Bauelemente hinausgeführt ist und dort eine elektrische Kontaktierung aufweist.

18. Integriert-optisches Element nach Anspruch 1, bei dem die Lichteintrittsfläche des Photoelements (23) geometrisch näher an den Lichtwellenleiter (20) herangeführt ist und teilweise in die Pufferschicht (54) hineinragt.

19. Integriert-optisches Element nach Anspruch 18, bei dem die Lichteintrittsfläche mit einer Halbleiterschicht (70) überdeckt ist, die Halbleiterschicht (70) einen höheren Brechungsindex als der Lichtwellenleiter (20) besitzt, und die evaneszenten Lichtfelder aus dem Lichtwellenleiter herauszieht und dem lichtempfindlichen Übergang des Halbleiters zur Detektion zuführt.

20. Integriert-optisches Element nach Anspruch 1, bei dem der Lichtwellenleiter (20) in einem organischen Polymerfilm (22) hergestellt und die photoempfindliche Seite des Photoelementes (23) mit einem höherbrechenden transparenten Klebstoff (24) direkt auf den Lichtwellenleiter (20) geklebt ist.

21. Integriert-optisches Element nach einem der vorhergehenden Ansprüche, bei dem der Koppelabstand über zwischen dem den Lichtwellenleiter (20) aufnehmenden Polymer (22) und dem Photoelement (23) angeordneten Abstandshalter (25) einstellbar ist.

22. Integriert-optisches Element nach einem der vorhergehenden Ansprüche, bei dem die Abstandshalter (25) durch auf das Photoelement (23) aufgebrachte galvanisch verstärkte Leiterbahnen gebildet sind.

23. Integriert-optisches Element nach einem der vorhergehenden Ansprüche, bei dem die Koppelstelle gleichzeitig die mechanische Fixierung des Photoelements (23) realisiert.

24. Integriert-optisches Element nach einem der vorhergehenden Ansprüche, bei dem der Lichtwellenleiter (20) zusammen mit dem angekoppelten Photoelement (23) mit einer niedrigbrechenden Deckschicht (27) vergossen ist.

## Claims

1. Integrated-optical element for the evanescent coupling of a photoelement to a waveguide, having a substrate (21), a waveguide and a photoelement, there being between the waveguide (20) and the photoelement (23) a buffer layer (30), which has a refractive index which is always less than the refractive index of the waveguide, and the refractive index of the buffer layer in the region of the photoelement (23) being greater than the refractive index of the buffer layer outside the region of the photoelement (23).

2. Integrated-optical element according to Claim 1, in which the photoelement is integrated by planar and monolithic techniques into a surface of the substrate by implantation and/or diffusion, in which the buffer layer is applied to the surface of the substrate, and in which there is applied on the buffer layer a polymer layer in which the waveguide is laterally structured.

3. Integrated-optical element according to one of the preceding claims, in which the refractive index of the buffer layer (30) is raised by local ion diffusion or ion implantation in the region of the photoelement (23).

4. Integrated-optical element according to one of the preceding claims, in which a polymer layer with photopolymerizable additives, the refractive index of which is set in the region of the photoelement (23) by UV exposure, is used as the buffer layer (30).

5. Integrated-optical element according to Claim 4, in which the buffer layer (30) is photostructured in the lateral direction by a taper structure (40,41) having a slightly increased index being exposed into it.

6. Integrated-optical element according to Claim 5, in which the taper structure runs to a point.

7. Integrated-optical element according to Claim 1, in which the photoelement (23) is incorporated into a polymeric, upwardly closed cover plate (51), the cover plate (51) is fitted exactly onto a baseplate (50) having waveguides (20), and the buffer layer (54) is incorporated between the cover plate (51) and base plate (50).

8. Integrated-optical element according to Claim 7, in which the receiving opening (53) for the photoelement (23) is produced in the cover plate (51) by setting of a master structure, which is electroformed and duplicated in injection-moulding/injection-compression moulding processes.

9. Integrated-optical element according to either of Claims 7 or 8, in which the optical buffer layer (54) with photopolymerizable admixtures is applied to the cover plate (51) and the refractive index is produced in the longitudinal direction of the waveguide and/or as a spatial depth profile of the refractive index increase and/or as a taper structure by local UV exposure in the region of the sensitive window of the photoelement (23).

10. Integrated-optical element according to one of Claims 7 to 9, in which the buffer layer (54) is formed as a thin polymer film, on the side of which facing the cover plate (51) electrical conductor tracks (56) are arranged, and this buffer layer with the electrical conductor tracks is laminated onto the cover plate (51) and consequently the photoelements (23) are electrically contacted at the same time.

11. Integrated-optical element according to one of the preceding claims, in which the waveguides (20) consist of polymers which have been incorporated into structures formed as grooves in a polymeric base plate, the polymers incorporated in the grooves having a higher refractive index than the polymeric base plate.

12. Integrated-optical element according to one of the preceding claims, in which the refractive index of the buffer layer (54) is increased locally in the region of the sensitive window of the photoelement (23) by diffusion or implantation processes or UV exposures.

13. Integrated-optical element according to one of the preceding claims, in which the degree of optical coupling can be set via the refractive index of the buffer layer.

14. Integrated-optical element according to one of the preceding claims, in which the refractive index of the buffer layer is provided with a lateral and/or vertical variation within the region of the photoelement.

15. Integrated-optical element according to one of the preceding claims, in which the optical buffer layer (54) comprises a thermoplastic film embossed by means of an embossing tool.

16. Integrated-optical element according to one of the preceding claims, in which the optical buffer layer (54) has a smaller layer thickness locally in the region (60) of the sensitive window of the photoelement (23).

17. Integrated-optical element according to one of the preceding claims, in which the buffer layer (54), carrying electrical conductor tracks, (56) is led out beyond the outer dimensions of the devices and has electrical contacting there.

18. Integrated-optical element according to Claim 1, in which the light entry surface of the photoelement (23) is brought geometrically closer to the optical waveguide (20) and extends partially into the buffer layer (54).

19. Integrated-optical element according to Claim 18, in which the light entry surface is covered by a semiconductor layer (70), which semiconductor layer (70) has a higher refractive index than the optical waveguide (20), and draws the evanescent light fields out of the optical waveguide and feeds them to the light-sensitive junction of the semiconductor for detection.

20. Integrated-optical element according to Claim 1, in which the optical waveguide (20) is produced in an organic polymer film (22) and the photosensitive side of the photoelement (23) is adhesively attached by a higher-refractive-index transparent adhesive (24) directly onto the optical waveguide (20).

21. Integrated-optical element according to one of the preceding claims, in which the coupling distance can be set via spacers (25) arranged between the polymer (22) receiving the optical waveguide (20) and the photoelement (23).

22. Integrated-optical element according to one of the preceding claims, in which the spacers (25) are formed by conductor tracks thickened by electroplating, applied to the photoelement (23).

23. Integrated-optical element according to one of the preceding claims, in which the coupling location at the same time realizes the mechanical fixing of the photoelement (23).

24. Integrated-optical element according to one of the preceding claims, in which the optical waveguide (20) is encapsulated together with the coupled-on photoelement (23) by a lower-refractive-index covering layer (27).

## Revendications

1. Elément optique intégré pour le couplage évanescent d'un photo-élément sur un guide d'onde, comprenant un support (21), un guide d'onde et un photo-élément, et
- entre le guide d'onde (20) et le photo-élément (23), on a une couche tampon (30) ayant un indice de réfraction qui est toujours inférieur à l'indice de réfraction du guide d'onde et,
- l'indice de réfraction de la couche tampon dans la zone du photo-élément (23) est supérieur à l'indice de réfraction de la couche tampon à l'extérieur de la zone du photo-élément (23).

2. Elément optique intégré selon la revendication 1, dans lequel
l'élément photoélectrique est réalisé par implantation et/ou diffusion dans une surface du substrat, par intégration planaire et monolithique et,
- la couche tampon est appliquée sur la surface du substrat et,
- sur la couche tampon, on applique une couche en polymère dans laquelle est structuré latéralement le guide de lumière.

3. Elément optique intégré selon l'une des revendications précédentes,
caractérisé en ce qu'
on relève l'indice de réfraction de la couche tampon (30) par diffusion ionique locale ou implantation ionique dans la zone du photo-élément (23).

4. Elément optique intégré selon l'une des revendications précédentes,
caractérisé en ce que
la couche tampon (30) est une couche de polymère avec des additifs photopolymérisables dont l'indice de réfraction au niveau des photo-éléments (23) est réglé par un éclairage UV.

5. Elément optique intégré selon la revendication 4,
caractérisé en ce que
la couche tampon (30) est photo-structurée dans la direction latérale en ce qu'une structure en coin (40, 41) y est réalisée avec un indice légèrement augmenté.

6. Elément optique intégré selon la revendication 5,
caractérisé en ce que
la structure en coin se termine en pointe.

7. Elément optique intégré selon la revendication 1,
caractérisé en ce que
le photo-élément (23) est intégré dans une patte de recouvrement (51) en polymère, recouvert par le haut, et cette plaque de recouvrement (51) est insérée exactement dans la plaque de base (50) munie du guide d'onde (20), et entre la plaque de recouvrement (51) et la plaque de base (50) se trouve la couche tampon (54).

8. Elément optique intégré selon la revendication 7,
caractérisé en ce que
l'ouverture de réception (53) du photo-élément (23) dans la plaque de couverture (51) se fait par réglage d'une structure maître qui est moulée de manière galvanique et est multipliée par un procédé d'injection/matriçage.

9. Elément optique intégré selon l'une des revendications 7 ou 8,
selon lequel,
la couche optique tampon (54) est appliquée sur la plaque de recouvrement (51) avec des mélanges photopolymérisables et est obtenue par éclairement local aux ultraviolets dans la zone de la fenêtre sensible du photo-élément (23), on forme l'indice de réfraction dans la direction longitudinale du guide de lumière et/ou comme profil en profondeur, on augmente l'indice de réfraction et/ou le réalise sous la forme d'une structure en coin.

10. Elément optique intégré selon l'une des revendications 7 à 9,
caractérisé en ce que
la couche tampon (54) est une feuille de polymère mince dont le côté tourné vers la plaque de recouvrement (51) comporte des chemins conducteurs (56) et cette couche tampon portant les chemins conducteurs électriques est laminée sur la plaque de couverture (51) pour être en même temps mise en contact avec les photo-éléments (23).

11. Elément optique intégré selon l'une quelconque des revendications précédentes,
caractérisé en ce que
le guide d'onde (20) est en éléments de polymère placés dans des structures en forme de sillons réalisés dans la plaque de base en polymère et les éléments en polymère placés dans les sillons ont un indice de réfraction plus élevé que les polymères de la plaque de base.

12. Elément optique intégré selon l'une quelconque des revendications précédentes,
caractérisé en ce que
l'indice de réfraction de la couche tampon (54) est localement augmenté dans la zone de la fenêtre sensible du photo-élément (23) par un procédé de diffusion ou d'implantation ou encore par un éclairage aux rayons ultraviolets.

13. Elément optique intégré selon l'une quelconque des revendications précédentes,
caractérisé en ce que
le degré de couplage optique est réglé par l'indice de réfraction de la couche tampon.

14. Elément optique intégré selon l'une quelconque des revendications précédentes,
caractérisé en ce que
l'indice de réfraction de la couche tampon présente une variation latérale et/ou verticale dans la zone du photo-élément.

15. Elément optique intégré selon l'une quelconque des revendications précédentes,
caractérisé en ce que
la couche tampon optique (54) se compose d'une feuille thermoplastique matricée avec un outil de matriçage.

16. Elément optique intégré selon l'une quelconque des revendications précédentes,
caractérisé en ce que
la couche tampon optique (54) présente une épaisseur de couche localement plus faible dans la zone (60) de la fenêtre sensible du photo-élément (23).

17. Elément optique intégré selon l'une quelconque des revendications précédentes,
caractérisé en ce que
la couche tampon (54) avec les chemins conducteurs (56) déborde par ses dimensions extérieures par rapport au composant et y comporte des moyens de contact électriques.

18. Elément optique intégré selon la revendication 1,
caractérisé en ce que
la surface d'entrée de la lumière dans le photo-élément (23) est rapprochée géométriquement du guide d'onde optique (20) et pénètre en partie dans la couche tampon (54).

19. Elément optique intégré selon la revendication 18,
caractérisé en ce que
la surface d'entrée de lumière est recouverte d'une couche semi-conductrice (70) et cette couche a un indice de réfraction plus élevé que celui du guide d'onde optique (20) et extrait des champs lumineux évanescents du guide d'onde optique et les transfert à la jonction photosensible du semi-conducteur en vue de la détection.

20. Elément optique intégré selon la revendication 1,
caractérisé en ce que
le guide d'onde optique (20) est réalisé en un film en polymère organique (22) et le côté photosensible du photo-élément (23) est collé directement sur le guide d'onde (20) avec une colle transparente ayant un indice de réfraction plus élevé.

21. Elément optique intégré selon l'une quelconque des revendications précédentes,
caractérisé en ce que
la distance de couplage par les organes d'écartement (25) disposés entre le polymère (22) qui reçoit le guide de lumière (20) et le photo-élément (23) est réglable.

22. Elément optique intégré selon l'une quelconque des revendications précédentes,
caractérisé en ce que
les organes d'écartement (25) sont formés par des chemins conducteurs renforcés galvaniquement sur le photo-élément (23).

23. Elément optique intégré selon l'une quelconque des revendications précédentes,
caractérisé en ce que
le point de couplage réalise en même temps le blocage mécanique du photo-élément (23).

24. Elément optique intégré selon l'une quelconque des revendications précédentes,
caractérisé en ce que
le guide d'onde (20) est coulé avec une couche de recouvrement à faible indice de réfraction (27) en même temps que le photo-élément couplé (23).
